# EUROPEAN PATENT APPLICATION

(11) **EP 1 175 834 A1**
(43) Date of publication of application: **30.01.2002**
(21) Application number: 00921089.9
(22) Date of filing: 28.04.2000
(51) Int. Cl.: A01N 43/82, A01N 43/90

(54) **METHOD OF THE UTILIZATION OF BACTERICIDAL COMPOSITION**

(30) Priority: 30.04.1999 JP 12460199
(71) Applicant: Nihon Nohyaku Co., Ltd., Tokyo 103-8236 (JP)
(72) Inventor: TAJIMA, Sohkichi, Osaka-shi, Osaka 558-0003 (JP); UCHIKUROHANE, Tohru, Hashimoto-shi, Wakayama 648-0018 (JP); BABA, Koji, Kawachinagano-shi, Osaka 586-0044 (JP); TAKEMOTO, Tsuyosi, Kawachinagano-shi, Osaka 586-0024 (JP); YAMAMOTO, Yoshinobu, Kawachinagano-shi, Osaka 586-0044 (JP)
(74) Representative: Grünecker, Kinkeldey, Stockmair & Schwanhäusser Anwaltssozietät
(86) International application number: JP0002814
(87) International publication number: WO0065914

(57) **Abstract**

A method of the utilization of a fungicidal composition characterized by treating seeds of a subject plant or a cultivation carrier for sowing the subject plant with an effective amount of a composition containing, as the active ingredient, one or more members selected from among 1,2,3-thiadiazole derivatives represented by general formula (I) and salts thereof: 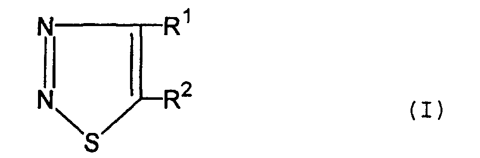 wherein R¹ represents H, (C₁₋₆)alkyl or C₃₋₇cycloalkyl, and R² represents CO-Y-R³ (wherein R³ represents H, (halo)(C₁₋₂₀)alkyl, (halo) (C₂₋₂₀)alkenyl, (substituted) carbamoyl(C₁₋₆)alkyl, (substituted) phenyl, (substituted) phenyl(C₁₋₆)alkyl, a 5- to 6-membered heterocycle having one or more hetero atoms selected from among O, S and N, etc.). This method is superior in the effect of controlling disease injury such as Pyricularia oryzae to the foliage application treatment.

## Description

### TECHNICAL FIELD

The present invention relates to a method of the utilization of a fungicidal composition containing a 1,2,3-thiadiazole derivative represented by general formula (I) or a salt thereof, which is useful as a plant disease controller. More particularly, the utilization method relates to a method of treating seeds of a subject plant or a cultivation carrier for sowing the subject plant.

### BACKGROUND ART

Although 1,2,3-thiadiazole derivatives of general formula (I) or salts thereof include novel 1,2,3-thiadiazole derivatives or salts thereof as some of them, most of them are well-known compounds disclosed. For example, JP-A-8-325110 discloses the usefulness of these compounds as a plant disease controller.

### DISCLOSURE OF THE INVENTION

The present inventors tested various utilization methods in order to further reduce the dosage of a 1,2,3-thiadiazole derivative of general formula (I) or a salt thereof, and consequently found that an excellent effect not expectable from foliage application treatment can be obtained by applying said 1,2,3-thiadiazole derivative of general formula (I) or salt thereof, for example, by treating seeds or a cultivation carrier for sowing with said 1,2,3-thiadiazole derivative or salt thereof, whereby the present invention has been accomplished.

The method of the utilization of a fungicidal composition of the present invention, i.e., the application of a fungicidal composition containing a 1,2,3-thiadiazole derivative of general formula (I) or a salt thereof as the active ingredient to seeds of a subject plant or a cultivation carrier for sowing, provides a more effective utilization method of the chemical.

### MODE FOR CARRYING OUT THE INVENTION

The present invention relates to a method of the utilization of a fungicidal composition which comprises treating seeds of a subject plant or a cultivation carrier for sowing the subject plant with an effective amount of a fungicidal composition containing, as the active ingredient, one or more members selected from among 1,2,3-thiadiazole derivatives represented by general formula (I) and salts thereof: 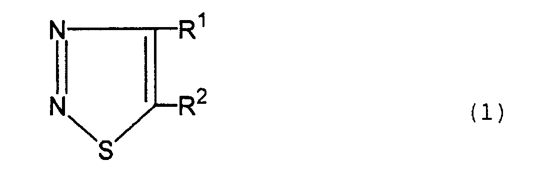 wherein R¹ is a hydrogen atom, a (C₁₋₆)alkyl group or a (C₃₋₇)cycloalkyl group, and R² is

CO-Y-R³

[wherein R³ is a hydrogen atom; a (C₁₋₂₀)alkyl group; a halo(C₁₋₂₀)alkyl group; a (C₂₋₂₀)alkenyl group; a halo(C₂₋₂₀)alkenyl group; a (C₂₋₂₀)alkynyl group; a halo(C₂₋₂₀)alkynyl group; a (C₃₋₁₂)cycloalkyl group; a (C₁₋₆) alkoxy(C₁₋₆) alkyl group; a (C₁₋₆) alkoxy (C₁₋₆) alkoxy (C₁₋ ₆)alkyl group; a carboxy(C₁₋₆)alkyl group; a (C₁₋₂₀)alkoxycarbonyl (C₁₋₆)alkyl group; a carbamoyl (C₁₋₆) alkyl group; a substituted carbamoyl(C₁₋₆)alkyl group having one or two substituents which may be the same or different and are selected from (C₁₋₆)alkyl groups, phenyl group and substituted phenyl groups having as the substituent(s) one or more halogen atoms or (C₁₋₆)alkyl groups, which may be the same or different; a cyano(C₁₋₆)alkyl group; a (C₁₋₆) alkylcarbonyloxy(C₁₋₆) alkyl group; a (C₁₋₆) alkylcarbonylamino (C₁₋₆) alkyl group; a phenyl group; a substituted phenyl group having 1 to 5 substituents which may be the same or different and are selected from halogen atoms, hydroxyl group, cyano group, nitro group, (C₁₋₆)alkyl groups, halo(C₁₋₆)alkyl groups, (C₁₋₆)alkoxy groups, halo (C₁₋₆) alkoxy groups, carboxyl group, (C₁₋₁₂)alkoxycarbonyl groups, carbamoyl group, and substituted carbamoyl groups having one or two substituents which may be the same or different and are selected from halogen atoms, (C₁₋₁₂)alkyl groups, phenyl group and substituted phenyl groups having as the substituent(s) 1 to 5 (C₁₋₆)alkyl groups which may be the same or different; a phenyl(C₁₋₆)alkyl group; a substituted phenyl(C₁₋₆)alkyl group having on the ring 1 to 5 substituents which may be the same or different and are selected from halogen atoms, hydroxyl group, cyano group, nitro group, (C₁₋₆)alkyl groups, halo(C₁₋₆)alkyl groups, (C₁₋₆)alkoxy groups, halo (C₁₋₆) alkoxy groups, carboxyl group, (C₁₋₁₂)alkoxycarbonyl groups, carbamoyl group, and substituted carbamoyl groups having one or two substituents which may be the same or different and are selected from halogen atoms, (C₁₋₁₂)alkyl groups, phenyl group and substituted phenyl groups having as the substituent(s) 1 to 5 (C₁₋₆)alkyl groups which may be the same or different; a phenylcarbonyloxy(C₁₋₆)alkyl group; a substituted phenylcarbonyloxy(C₁₋₆)alkyl group having on the ring 1 to 5 substituents which may be the same or different and are selected from halogen atoms, hydroxyl group, cyano group, nitro group, (C₁₋₆)alkyl groups, halo(C₁₋₆)alkyl groups, (C₁₋₆)alkoxy groups, halo (C₁₋₆) alkoxy groups, carboxyl group, (C₁₋₁₂)alkoxycarbonyl groups, carbamoyl group, and substituted carbamoyl groups having one or two substituents which may be the same or different and are selected from halogen atoms, (C₁₋₁₂)alkyl groups, phenyl group and substituted phenyl groups having as the substituent(s) 1 to 5 (C₁₋₆)alkyl groups which may be the same or different; a phenylcarbonylamino(C₁₋₆)alkyl group; a substituted phenylcarbonylamino(C₁₋₆)alkyl group having on the ring 1 to 5 substituents which may be the same or different and are selected from halogen atoms, hydroxyl group, cyano group, nitro group, (C₁₋₆)alkyl groups, halo (C₁₋₆) alkyl groups, (C₁₋₆)alkoxy groups, halo (C₁₋₆) alkoxy groups, carboxyl group, (C₁₋₁₂) alkoxycarbonyl groups, carbamoyl group, and substituted carbamoyl groups having one or two substituents which may be the same or different and are selected from halogen atoms, (C₁₋₁₂)alkyl groups, phenyl group and substituted phenyl groups having as the substituent(s) 1 to 5 (C₁₋₆)alkyl groups which may be the same or different; a 5- or 6-membered heterocyclic ring having one or more heteroatoms which may be the same or different and are selected from oxygen atom, sulfur atom and nitrogen atom; a substituted 5- or 6-membered heterocyclic ring having 1 to 5 substituents which may be the same or different and are selected from halogen atoms, hydroxyl group, cyano group, nitro group, (C₁₋₆)alkyl groups, halo(C₁₋₆)alkyl groups, (C₁₋₆)alkoxy groups, halo(C₁₋₆)alkoxy groups, carboxyl group, (C₁₋₁₂)alkoxycarbonyl groups, carbamoyl group, and substituted carbamoyl groups having one or two substituents which may be the same or different and are selected from halogen atoms, (C₁₋₁₂)alkyl groups, phenyl group and substituted phenyl groups having as the substituent(s) 1 to 5 (C₁₋₆)alkyl groups which may be the same or different; a 5- or 6-membered heterocyclic ring-(C₁₋₆)alkyl group having one or more heteroatoms which may be the same or different and are selected from oxygen atom, sulfur atom and nitrogen atom; a substituted 5- or 6-membered heterocyclic ring-(C₁₋₆)alkyl group having 1 to 5 substituents which may be the same or different and are selected from halogen atoms, hydroxyl group, cyano group, nitro group, (C₁₋₆)alkyl groups, halo(C₁₋₆)alkyl groups, (C₁₋₆)alkoxy groups, halo(C₁₋₆)alkoxy groups, carboxyl group, (C₁₋₁₂)alkoxycarbonyl groups, carbamoyl group, and substituted carbamoyl groups having one or two substituents which may be the same or different and are selected from halogen atoms, (C₁₋₁₂)alkyl groups, phenyl group and substituted phenyl groups having as the substituent(s) 1 to 5 (C₁₋₆)alkyl groups which may be the same or different; a 5- or 6-membered heterocyclic ring-carbonyloxy(C₁₋₆)alkyl group having one or more heteroatoms which may be the same or different and are selected from oxygen atom, sulfur atom and nitrogen atom; a substituted 5- or 6-membered heterocyclic ring-carbonyloxy(C₁₋₆)alkyl group having 1 to 5 substituents which may be the same or different and are selected from halogen atoms, hydroxyl group, cyano group, nitro group, (C₁₋₆)alkyl groups, halo(C₁₋₆)alkyl groups, (C₁₋₆)alkoxy groups, halo (C₁₋₆) alkoxy groups, carboxyl group, (C₁₋₁₂)alkoxycarbonyl groups, carbamoyl group, and substituted carbamoyl groups having one or two substituents which may be the same or different and are selected from halogen atoms, (C₁₋₁₂)alkyl groups, phenyl group and substituted phenyl groups having as the substituent(s) 1 to 5 (C₁₋₆)alkyl groups which may be the same or different; a 5- or 6-membered heterocyclic ring-carbonylamino(C₁₋₆)alkyl group having one or more heteroatoms which may be the same or different and are selected from oxygen atom, sulfur atom and nitrogen atom; a substituted 5- or 6-membered heterocyclic ring-carbonylamino(C₁₋₆)alkyl group having 1 to 5 substituents which may be the same or different and are selected from halogen atoms, hydroxyl group, cyano group, nitro group, (C₁₋₆)alkyl groups, halo(C₁₋₆)alkyl groups, (C₁₋₆)alkoxy groups, halo (C₁₋₆) alkoxy groups, carboxyl group, (C₁₋₁₂)alkoxycarbonyl groups, carbamoyl group, and substituted carbamoyl groups having one or two substituents which may be the same or different and are selected from halogen atoms, (C₁₋₁₂)alkyl groups, phenyl group and substituted phenyl groups having as the substituent(s) 1 to 5 (C₁₋₆)alkyl groups which may be the same or different; or

-N=C(R⁵)R⁶

wherein each of R⁵ and R⁶, which may be the same or different, is a hydrogen atom, a (C₁₋₆)alkyl group, a halo(C₁₋₆)alkyl group, a (C₃₋₆)cycloalkyl group, a phenyl group or a substituted phenyl group having one or more substituents which may be the same or different and are selected from halogen atoms, (C₁₋₆)alkyl groups and (C₁₋₆)alkoxy groups, R⁵ and R⁶ being able to be taken together to represent a (C₂₋₆)alkylene group which may contain O, S or NR⁴ (wherein R⁴ is a hydrogen atom or a (C₁₋₆)alkyl group) between adjacent carbon atoms of the carbon chain, and Y is O, S or NR⁴ (wherein R⁴ is as defined above)], or 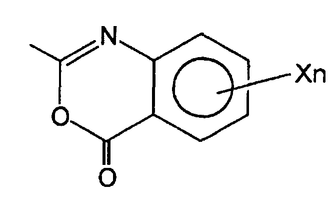 (wherein each of Xs, which may be the same or different, is a halogen atom, a hydroxyl group, a cyano group, a nitro group, a (C₁₋₆)alkyl group, a halo(C₁₋₆)alkyl group, a (C₁₋₆)alkoxy group, a halo(C₁₋₆)alkoxy group, a (C₁₋₆)alkylcarbonyl group, a carboxyl group, a (C₁₋₁₂)alkoxycarbonyl group, a carbamoyl group, or a substituted carbamoyl group having one or two substituents which may be the same or different and are selected from halogen atoms, (C₁₋₁₂)alkyl groups, phenyl group and substituted phenyl groups having as the substituent(s) 1 to 5 (C₁₋₆)alkyl groups which may be the same or different, and n is an integer of 0 to 4).

In the definition of the substituents in the present invention, "n-" is a prefix for "normal", "i-" is a prefix for "iso", "t-" is a prefix for "tertiary", and "s-" is a prefix for "secondary". The term " (C₁₋₁₂)alkyl" means a linear or branched alkyl group of 1 to 12 carbon atoms, such as methyl group, ethyl group, n-propyl group, i-propyl group, n-butyl group, i-butyl group, s-butyl group, t-butyl group, neopentyl group, 1,2-dimethylpropyl group, n-hexyl group, n-heptyl group, n-octyl group, decyl group, dodecyl group or the like. The term "halogen atom" means a chlorine atom, a bromine atom, an iodine atom or a fluorine atom.

The "5- or 6-membered heterocyclic ring having one or more heteroatoms which may be the same or different and are selected from oxygen atom, sulfur atom and nitrogen atom" includes, for example, 2-furyl group, 3-furyl group, 2-thienyl group, 3-thienyl group, 2-pyrrolyl group, 2-pyridyl group, 3-pyridyl group, 4-pyridyl group, isoxazol-3-yl group, 1,3-oxazol-2-yl group, 1,3-thiazol-2-yl group, 1,3-thiazol-4-yl group, 1,3-thiazol-5-yl group, 2-imidazolyl group, 2-pyrimidyl group, 4-pyrimidyl group, 3-pyridazinyl group, 2-pyrazinyl group, 2-indolyl group, 2-quinolyl group, 2-purinyl group, 1-benzofuran-2-yl group, 1,3-benzoxazol-2-yl group, 1,2-benzoisothiazol-3-yl group, 1,3-benzoisothiazol-6-yl group, 1,3-benzimidazol-2-yl group, 1,3,4-thiadiazol-2-yl group, 1,2,3-thiadiazol-5-yl group, and 1,2,3,4-tetrazol-5-yl group.

As the salt in the present invention, there can be exemplified salts with an acid, for example, salts with a mineral acid such as hydrochloric acid, sulfuric acid, phosphoric acid or the like, and salts with an organic acid such as acetic acid, oxalic acid, lactic acid, tartaric acid, fumaric acid, maleic acid, methanesulfonic acid, benzenesulfonic acid or the like; and salts with a base, for example, salts with a metal such as sodium, potassium, calcium, copper or the like, and salts with an organic base such as pyridine, imidazole, ammonia or the like.

The 1,2,3-thiadiazole derivative of general formula (I) or a salt thereof, i.e., the compound used as the active ingredient in the present invention is preferably a compound in which R¹ is a (C₁₋₆)alkyl group and R² is CO-Y-R³ (wherein Y is preferably an oxygen atom and R³ is preferably a hydrogen atom or a substituted phenyl group having as the substituent(s) one or more halogen atoms or (C₁₋₆)alkyl groups, which may be the same or different). The 1,2,3-thiadiazole derivative of general formula (I) or a salt thereof is more preferably N-(3-chloro-4-methylphenyl)-4-methyl-1,2,3-thiadiazole-5-carboxamide.

Typical compounds as the 1,2,3-thiadiazole derivative of general formula (I) or a salt thereof, i.e., the compound used as the active ingredient in the present invention are listed in Table 1 and Table 3, but they are not intended in any way to limit the scope of the present invention.

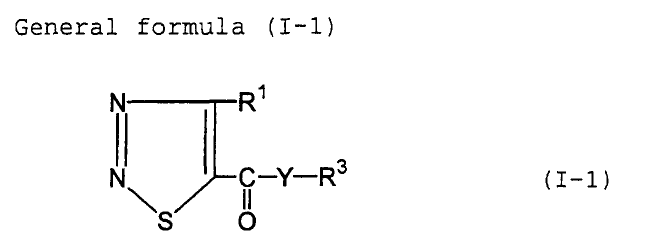

**Table 1**

| No. | R¹ | Y | R³ | Physical property |
|---|---|---|---|---|
| 1 | H | O | H | m.p.107.1°C |
| 2 | H | NH | H | m.p.160.8°C |
| 3 | CH₃ | O | H | m.p.188-189.5°C |
| 4 | CH₃ | O | Na | m.p.230°C(decomp.) |
| 5 | CH₃ | O | CH₃ | nD 1.5165(23.2°C) |
| 6 | CH₃ | O | C₂H₅ | nD 1.5075(14.0°C) |
| 7 | CH₃ | O | n-C₃H₇ | nD 1.4000(12.5°C) |
| 8 | CH₃ | O | i-C₃H₇. | nD 1.4400(14.3°C) |
| 9 | CH₃ | O | s-C₄H₉ | nD 1.4165(24.2°C) |
| 10 | CH₃ | O | CH₂CH(C₂H₅)C₄H₉-n | nD 1.4891(23.1°C) |
| 11 | CH₃ | O | n-C₈H₁₇ | nD 1.4900(12.9°C) |
| 12 | CH₃ | O | n-C₁₂H₂₅ | nD 1.5403(22.0°C) |
| 13 | CH₃ | O | n-C₁₆H₃₃ | nD 1.4859(22.0°C) |
| 14 | CH₃ | O | c-C₆H₁₁ | nD 1.5248(25.2°C) |
| 15 | CH₃ | O | CH₂-Ph | nD 1.5735(13.1°C) |
| 16 | CH₃ | O | CH₂-(4-Cl-Ph) | m.p.85°C |
| 17 | CH₃ | O | CH₂-(3,5-Cl₂-Ph) | m.p.81°C |
| 18 | CH₃ | O | CH₂-(4-t-C₄H₉-Ph) | nD 1.5558(26.3°C) |
| 19 | CH₃ | O | CH₂-(4-NO₂-Ph) | m.p.100°C |
| 20 | CH₃ | O | CH(CH₃)-Ph | nD 1.5631(25.0°C) |
| 21 | CH₃ | O | Ph | nD 1.5845(20.6°C) |
| 22 | CH₃ | O | 4-Cl-Ph | m.p.77-80°C |
| 23 | CH₃ | O | 2-CH₃-Ph | m.p.62-64°C |
| 24 | CH₃ | O | 4-CH₃-Ph | m.p.31°C |
| 25 | CH₃ | O | 4-CH₃O-Ph | m.p.73°C |
| 26 | CH₃ | O | 2-COCH₃ | m.p.77°C |
| 27 | CH₃ | O | 2-COOCH₃-Ph | m.p.102°C |
| 28 | CH₃ | O | 2-COOC₃H₇-i-Ph | paste |
| 29 | CH₃ | O | CH₂-Q¹ | nD 1.5391(17.1°C) |
| 30 | CH₃ | O | CH₂CH₂O-Q² | m.p.54°C |
| 31 | CH₃ | O | CH₂CH(CH₃)O-Q² | nD 1.5812(22°C) |
| 32 | CH₃ | O | (s)-CH(CH₃)COOC₂H₅ | nD 1.4858(21.9°C) |
| 33 | CH₃ | O | CH₂CH₂NHCO-PH | m.p.85°C |
| 34 | CH₃ | O | N=CH-Ph | m.p.113.5°C |
| 35 | CH₃ | O | N=C(CH₃)-Ph | m.p.99.9°C |
| 36 | CH₃ | S | CH₃ | m.p.40.1°C |
| 37 | CH₃ | S | C₂H₅ | nD 1.5229(20.8°C) |
| 38 | CH₃ | S | i-C₃H₇ | nD 1.5620(21.8°C) |
| 39 | CH₃ | S | n-C₁₂H₂₅ | nD 1.5621(18.6°C) |
| 40 | CH₃ | S | CH₂-Ph | nD 1.6239(21.1°C) |
| 41 | CH₃ | NH | H | m.p.115°C |
| 42 | CH₃ | NH | CH₃ | m.p.45°C |
| 43 | CH₃ | NH | C₂H₅ | m.p.44°C |
| 44 | CH₃ | NH | i-C₃H₇ | m.p.65°C |
| 45 | CH₃ | NH | c-C₆H₁₁ | m.p.98°C |
| 46 | CH₃ | NH | Ph | m.p.110°C |
| 47 | CH₃ | NH | 2-Cl-Ph | m.p.101°C |
| 48 | CH₃ | NH | 3-Cl-Ph | m.p.136-142°C |
| 49 | CH₃ | NH | 4-Cl-Ph | m.p.114°C |
| 50 | CH₃ | NH | 2-CH₃-Ph | m.p.115°C |
| 51 | CH₃ | NH | 3-CH₃-Ph | m.p.111°C |
| 52 | CH₃ | NH | 4-CH₃-Ph | m.p.109°C |
| 53 | CH₃ | NH | 2,4-Cl₂-Ph | m.p.118-119°C |
| 54 | CH₃ | NH | 3,4-Cl₂-Ph | m.p.138-139°C |
| 55 | CH₃ | NH | 3-Cl-4-CH₃-Ph | m.p.113°C |
| 56 | CH₃ | NH | 3,4-(CH₃)₂-Ph | m.p.111°C |
| 57 | CH₃ | NH | 4-CH₃O-Ph | m.p.117°C |
| 58 | CH₃ | NH | 4-NO₂-Ph | m.p.175°C |
| 59 | CH₃ | NH | 4-CN-Ph | m.p.172°C |
| 60 | CH₃ | NH | 2-COOH-Ph | m.p.223°C |
| 61 | CH₃ | NH | 2-COOC₂H₅-Ph | m.p.63°C |
| 62 | CH₃ | NH | 4-COOCH₃-Ph | m.p.133°C |
| 63 | CH₃ | NH | 2-CONHCH₃-Ph | m.p.162°C |
| 64 | CH₃ | NH | 2-CONHC₃H₇-i-Ph | m.p.177°C |
| 65 | CH₃ | NH | 3-CONHC₃H₇-i-Ph | m.p.158°C |
| 66 | CH₃ | NH | 4-CON(CH₃)₂-Ph | m.p.176.8-178.6°C |
| 67 | CH₃ | NH | CH₂-Ph | m.p.53°C |
| 68 | CH₃ | NH | CH(CH₃) (4-Cl-Ph) | m.p.108°C |
| 69 | CH₃ | NH | CH₂CN | m.p.76-78°C |
| 70 | CH₃ | NH | CH₂CH₂CN | m.p.86-87°C |
| 71 | CH₃ | NH | CH(CH₃) (i-C₃H₇) | nD 1.5235(25.9°C) |
| 72 | CH₃ | NH | CH₂COOC₂H₅ | nD 1.5248(21.5°C) |
| 73 | CH₃ | NH | CH₂COOC₈H₁₇-n | paste |
| 74 | CH₃ | NH | CH₂CONH(4-Cl-Ph) | m.p.211°C |
| 75 | CH₃ | NH | CH₂CONH(4-CH₃O-Ph) | m.p.188°C |
| 76 | CH₃ | NH | CH(CH₃)CH₂COOCH₃ | nD 1.5250(20.4°C) |
| 77 | CH₃ | NH | CH (i-C₃H₇)COOCH₃ | paste |
| 78 | CH₃ | NH | CH(CH₃)COOCH₃ | paste |
| 79 | CH₃ | NH | CH₂CH₂NHCOQ² | m.p.149°C |
| 80 | CH₃ | NH | N=C(CH₃)₂ | m.p.198°C |
| 81 | CH₃ | NH | N=C(CH₃)C₂H₅ | m.p.152-153°C |
| 82 | CH₃ | NH | N=CH-Ph | m.p.238°C |
| 83 | CH₃ | NH | N=C(CH₃)-Ph | m.p.260-270°C |
| 84 | CH₃ | NCH₃ | CH₃ | nD 1.5555(13.2°C) |
| 85 | CH₃ | NC₂H₅ | C₂H₅ | nD 1.5356(13.7°C) |
| 86 | C₂H₅ | O | H | m.p.137.1-138.4°C |
| 87 | C₂H₅ | O | CH₃ | nD 1.5093(24.1°C) |
| 88 | C₂H₅ | O | CH₂-Ph | nD 1.5539 (23.7 °C) |
| 89 | C₂H₅ | NH | H | m.p.139.0°C |
| 90 | C₂H₅ | NH | Ph | m.p.81.9°C |
| 91 | n-C₃H₇ | O | C₂H₅ | nD 1.4958(21.0°C) |
| 92 | i-C₃H₇ | O | H | m.p.136.6°C |
| 93 | i-C₃H₇ | O | C₂H₅ | nD 1.4943(20.9°C) |
| 94 | i-C₃H₇ | O | n-C₅H₁₇ | nD 1.4845(21.8°C) |
| 95 | i-C₃H₇ | O | CH₂-Ph | nD 1.5505 (23.8°C) |
| 96 | i-C₃H₇ | NH | H | m.p.137.3°C |
| 97 | i-C₃H₇ | NH | Ph | m.p.112.3°C |
| 98 | n-C₄H₉ | O | H | m.p.92.3°C |
| 99 | n-C₄H₉ | O | CH₃ | nD 1.4993(22.3°C) |
| 100 | n-C₄H₉ | O | H | m.p.111.1°C |
| 101 | n-C₄H₉ | O | CH₃ | nD 1.5082(13.0°C) |
| 102 | n-C₅H₁₁ | O | H | m.p.86.2°C |
| 103 | n-C₅H₁₁ | O | CH₃ | nD 1.4969(22.5°C) |
| 104 | c-C₃H₅ | O | H | m.p.157.1°C |
| 105 | c-C₃H₅ | O | CH₃ | m.p.47.4°C |

In Table 1, "Ph" stands for a phenyl group, "c-" is used for expressing that a group is an alicyclic hydrocarbon group, and Q¹ and Q² stand for the following groups:

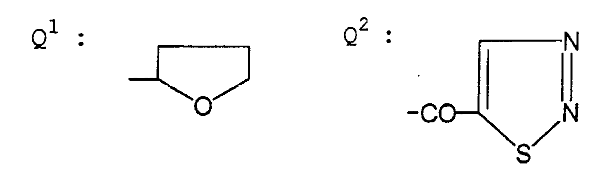

Table 2 shows NMR values of the compounds having a physical property expressed by the word "paste" in Table 1.

**Table 2**

| No. | 1H-NMR[CDCl3/TMS, δ (ppm)] |
|---|---|
| 73 | 0.88(t,3H), 1.21-1.40(m,10H), 1.60-1.74(m,2H), 2.94(s,3H), 4.18-4.24(m,4H), 6.52(bs,1H). |
| 77 | 1.00(t,6H), 2.30(m,1H), 2.95(s,3H), 3.80(s,3H), 4.74(m,1H), 6.42(bs,1H). |
| 78 | 1.69(s,6H), 2.90(s,3H), 3.81(s,3H), 6.79(bs,1H). |

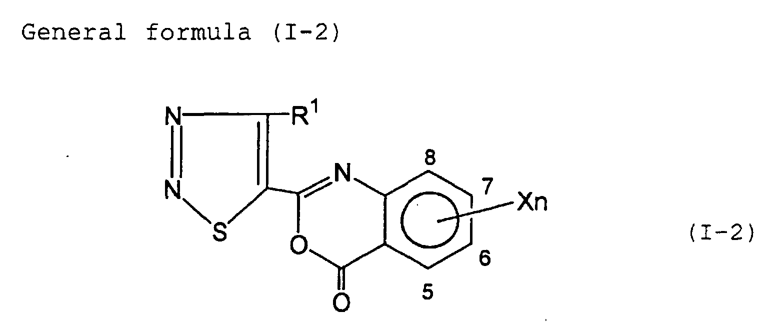

**Table 3**

| No. | R¹ | Xn | Physical property |
|---|---|---|---|
| 106 | CH₃ | H | m.p.156°C |
| 107 | CH₃ | 5-F | m.p.176-177°C |
| 108 | CH₃ | 6-F | m.p.151°C |
| 109 | CH₃ | 5-CH₃ | m.p.193°C |
| 110 | CH₃ | 8-CH₃ | m.p.174°C |
| 111 | C₂H₅ | H | m.p.99°C |
| 112 | i-C₃H₇ | H | m.p.145°C |

The fungicidal composition used in the present invention contains the 1,2,3-thiadiazole derivative(s) of general formula (I) or salt(s) thereof as the active ingredient(s), and can be used not only singly but also in admixture with various compounds, for example, the following compounds having fungicidal activity.

The compounds having fungicidal activity include various fungicides such as melanin synthesis inhibitors, strobilurin fungicides, ergosterol biosynthesis inhibitors, acid amide fungicides, succinate synthetase inhibitory fungicides, acylalanine fungicides, dicarboxyimide fungicides, benzimidazole fungicides, dithiocarbamate fungicides, metal-containing fungicides, antibiotics, etc.

As diseases to be controlled by the use of the fungicidal composition containing the 1,2,3-thiadiazole derivative(s) of general formula (I) or salt(s) thereof which can be used by the utilization method of the present invention, the following plant diseases can be exemplified.

When broadly classified, the plant diseases include fungal diseases, fungicidal diseases and viral diseases. The plant diseases include, for example, diseases caused by imperfect fungi (e.g. Botrytis diseases, Helminthosporium diseases, Fusarium diseases, Septoria diseases, Cercospora diseases, Pyricularia diseases and Alternaria diseases), Basidiomycetes (e.g. Hemileia diseases, Rhizoctonia diseases and Puccinia diseases), Ascomycetes (e.g. Venturia diseases, Podosphaera diseases, Erysiphe diseases, Monilinia diseases and Unsinula diseases) and other bacteria (e.g. Ascochyta diseases, Phoma diseases, Pythium diseases, Corticium diseases and Pyrenophora diseases) ; diseases caused by fungi, such as Pseudomonas diseases, Xanthomonas diseases and Erwinia diseases; and diseases caused by viruses (e.g. tobacco mosaic virus).

The fungicidal composition is markedly effective in controlling individual diseases, for example, rice blast (Pyricularia oryzae), rice sheath blight (Rhizoctonia solani), rice Helminthosporium leaf spot (Cochiobolus miyabeanus), rice seedling blight (Rhizopus chinensis, Pythium graminicola, Fusarium graminicola, Fusarium roseum, Mucor sp., Phoma sp., Tricoderma sp.), rice "Bakanae" disease (Gibberella fujikuroi), powdery mildew of barley, wheat and the like (Erysiphe graminis), powdery mildew of cucumber and the like (Sphaerotheca fuliginea), powdery mildew of other host plants, eye spot of barley, wheat and the like (Pseudocercosporella herpotrichoides), smut of wheat and the like (Urocystis tritici), snow blight of barley, wheat and the like (Fusariumu nivale, Pythium iwayamai, Typhla ishikariensis, Typhla incarnata, Sclerotinia borealis), oats crown rust (Puccinia coronata) and rust of other plants, gray mold of cucumber, strawberry and the like (Botrytis cinerea), stem rot of tomato, cabbage and the like (Sclerotinia sclerotiorum), late blight of tomato and the like (Phytophthora infestans) and late blight or Phytophthora rot of other plants, downy mildew of various plants, such as cucumber downy mildew (Pseudoperonospora cubensis) and grape downy mildew (Plasmopara viticola), apple scab (Venturia inaequalis), apple Alternaria leaf spot (Alternaria mali), pear black spot (Alternaria kikuchiana), citrus melanose (Diaporthe citri), citrus scab (Elsinoe fawcetti), beet leaf spot (Cercospora beticola), peanut leaf spot (Cercospridium personatum), peanut leaf spot (Cercospora personata), wheat leaf blight (Septoria tritici), wheat glume blotch (Septoria nodorum), barley scald (Rhynchosporium secalis), wheat bunt (Tilletia caries), lawn grass foliage blight (Rhizoctonia solani), lawn grass dollar spot (Sclerotinia homoeocarpa); fungicidal diseases caused by Pseudomonas (e.g. cucumber bacterial spot (Pseudomonas syringae pv. lachrymans), tomato bacterial wilt (Pseudomonas solanacearum) and rice bacterial grain rot (Pseudomonas glumae)), Xanthomonas (e.g. cabbage black rot (Xanthomonas campestris), rice bacterial leaf blight (Xanthomonas oryzae) and citrus bacterial canker (Xanthomonas citri)), Erwinia (e.g. cabbage bacterial soft rot (Erwinia carotovora)) and the like; and viral diseases such as tobacco mosaic (Tobacco mosaic virus).

Subject plants to which the fungicidal composition according to the present invention can be applied are not particularly limited and include, for example, the following plants.

The fungicidal composition can be applied to plants such as grains (e.g. rice, barley, wheat, rye, oats, corn and kaoliang), beans (e.g. soybean, adzuki bean, broad bean, pea and peanut), fruit trees fruits (e.g. apple, citruses, pear, grape, peach, Japanese apricot, cherry, walnut, almond, banana and strawberry), vegetables (e.g. cabbage, tomato, spinach, broccoli, lettuce, onion, Welsh onion and green pepper), edible roots (e.g. carrot, potato, sweet potato, Japanese radish, East Indian lotus and turnip), industrial crops (e.g. cotton, flax, paper mulberry, mitsumata, rape, hop, sugar cane, sugar beet, olive, gum, coffee, tobacco and tea), melons and cucumbers (e.g. pumpkin, cucumber, watermelon and melon), grasses (e.g. orchard grass, sorghum, timothy, clover and alfalfa), lawn grasses (e.g. Korean lawn grass and bent grass), crops for perfumes, spices and the like (e.g. lavender, rosemary, common garden thyme, parsley, pepper and ginger), and flowers and ornamental plants (e.g. chrysanthemum, rose and orchid).

The fungicidal composition used in the utilization method of the present invention is used to control various diseases in the following manner: it is applied to seeds of a subject plant on which the diseases are expected to occur or a cultivation carrier for sowing the subject plant, as it is or after being properly diluted with or suspended in water or the like, in an amount effective for control of the plant diseases. The fungicidal composition can be used by application to a rice nursery box, an application method such as dressing of seeds, or an application method such as seed disinfection. Diseases which occur in upland farming of fruit trees, grains, vegetables and the like can be controlled by using the fungicidal composition, for example, by seed treatment such as dressing or immersion, drench of a nursery carrier such as a cultivation vessel for raising of seedling or a planting hole, or absorption of the composition into the plant caused by surface dressing followed by watering or the like. The fungicidal composition may be applied to a solution for water culture in the case of water culture.

As a method for the seed treatment, there can be exemplified a method of immersing seeds in a liquid prepared from a liquid or solid formulation by or without dilution, to impregnate the seeds with the liquid chemical; a method of sticking a solid formulation or a liquid formulation to the surfaces of seeds, for example, by mixing and dressing of the seeds with the formation; a method of coating seeds with a mixture of the fungicidal composition and an adhesive carrier such as a resin or polymer; and a method of applying the fungicidal composition near seeds simultaneously with planting.

The "seeds" subjected to said seed treatment is synonymous in a broad sense with "plant-derived thing for breeding" in the present invention, and includes not only so-called seeds but also plant-derived things for vegetative propagation, such as a bulb, tuber, seed tuber, scaly bulb, stalk for cultivation of cutting, etc.

In the case of practicing the utilization method of the present invention, "soil" or "cultivation carrier" refers to a support for cultivating a plant. A material for the support is not particularly limited and any material may be used so long as it permits growing of the plant. The material includes, for example, so-called various soils, nursery mats and water, which may contain sand, vermiculite, cotton, paper, diatomaceous earth, agar, gelatinous materials, high-molecular weight substances, glass-wool, foamed polystyrenes, wood chips, bark, pumice, etc.

As a method for applying the fungicidal composition to soil, there can be exemplified a method of applying a liquid formulation of the composition in the vicinity of a place of setting a plant-derived thing or to a nursery bed for raising of seedling after or without diluting the liquid formulation with water; a method of applying granules of the composition in the vicinity of a place of setting a plant-derived thing or to a nursery bed; a method of applying a dust, a wettable powder, water dispersible granules, granules or the like of the composition to mix the same with the whole soil before sowing or transplantation; and a method of applying a dust, a wettable powder, water dispersible granules, granules or the like of the composition to planting holes, planting rows or the like before sowing or before planting a plant-derived thing.

As to a method for applying the fungicidal composition to a nursery box for paddy rice, the composition may be applied in a preparation form such as a dust, water dispersible granules, granules or the like, though its preparation form is varied in some cases, depending on application time selected from application at sowing time, application at a greening time, application at transplantation time, etc. The composition may be applied also by mixing with cultivation soil. Mixing of a dust, water dispersible granules, granules or the like of the composition with cultivation soil, for example, mixing with bed soil, mixing with covering soil, or mixing with the whole cultivation soil is possible. Any of these formulations may be merely applied so that it and cultivation soil may form layers alternately. As to the timing of the application at sowing time, the application may be carried out before, simultaneous with, or after the sowing, and it may be carried out after soil covering.

In the case of upland crops such as barley, wheat, oats and rye, it is preferable to treat seeds or a cultivation carrier or the like close to a plant-derived thing at sowing time to raising-of-seedling time. In the case of a plant to be sowed directly in an upland field, direct treatment of seeds or treatment of a cultivation carrier or the like close to the plant under cultivation is suitable. It is possible to treat the plant with granules by sprinkling or treat the plant with a chemical diluted or undiluted with water, by drench of the chemical in a liquid state.

As treatment of a plant to be cultivated and then transplanted, at sowing time or raising-of-seedling time, the following is preferable: direct treatment of seeds, treatment of a nursery bed for raising of seedling with a liquid chemical by drench, or treatment of the nursery bed with granules by sprinkling. It is also preferable to treat planting holes with granules at setting time or mix granules with a cultivation carrier close to a transplantation place.

The fungicidal composition used in the utilization method of the present invention may be applied after being prepared into a conventional form such as an emulsion, a wettable powder, a suspension, a soluble concentrate, granules, a dust or the like. Although the applying dosage of the fungicidal composition is varied depending upon the content of the compound as active ingredient, weather conditions, a preparation form, an application time, an application method, an application site, diseases to be controlled, a crop to be protected, etc., the fungicidal composition may be applied usually in a dosage properly chosen in the range of 0.01 to 40%, preferably 0.1 to 10%, in terms of the compound as active ingredient, based on the total weight of seeds. When the emulsion, wettable powder, suspension, soluble concentrate or the like is applied after being diluted with water or the like, the applying concentration thereof is 0.001 to 70% in terms of the active ingredient. Usually, the granules, the dust, the soluble concentrate in the case of treating seeds, and the like may be used as they are without dilution.

If necessary, the fungicidal composition used in the utilization method of the present invention may be mixed with or used in combination with other components. For example, in seed treatment, the composition may contain repellents and other components for the purpose of preventing consumption (including swallowing-by-mistake) by animals such as birds. As the repellents, there can be exemplified bad-smelling compounds (e.g. naphthalene compounds), antifeedants (e.g. castor oil, colophonium, polybutanes, diphenylaminepentachlorophenol, quinone, zinc oxide and aromatic solvents), bitter substances (e.g. N-(trichloromethylthio)-4-cyclohexene-1,2-carboximide, anthraquinone, copper oxalate, and terpene), p-dichlorobenzene, aryl isothiocyanate, amyl acetate, anethole, citrus oils, cresols, herb oils (e.g geranium oil and lavender oil), menthol, methyl salicylate, nicotine, pentanethiol, pyridines, tributyltin chloride, thiram, ziram, carbamate insecticides (e.g. Methiocarb), Guazatin, cyclodiene chloride insecticides (e.g. Endrin), organophosphorus insecticides (e.g. Fenthion), etc.

As the other components, there can be exemplified poisonous substances or propagation inhibitors (chemosterilants), such as 3-chloro-4-toluidine hydrochloride, strychnine, 20, 25-diazacholesterol hydrochloride (cord name: SC-12937), etc.

### EXAMPLES

Typical examples and test examples of the present invention are described below, but the present invention is not limited to them. In the examples, parts are all by weight.

### Example 1

| | |
|---|---|
| Each compound listed in Table 1 or Table 3 | 10 parts |
| Calcined diatomaceous earth | 73 parts |
| Polyoxyethylene nonylphenyl ether | 5 parts |
| Condensation product of naphthalenesulfonic acid and formaldehyde | 4 parts |
| Hydrated silicic acid | 8 parts |

A wettable powder was prepared by mixing uniformly and grinding the above ingredients.

### Example 2

| | |
|---|---|
| Each compound listed in Table 1 or Table 2 | 5 parts |
| Synthetic hydrated silicon dioxide | 1 part |
| Calcium lignin sulfonate | 2 parts |
| Bentonite | 30 parts |
| Kaolin clay | 62 parts |

Granules were prepared by mixing uniformly and grinding the above ingredients, and kneading the resulting mixture together with a suitable amount of water, followed by granulation and drying.

### Example 3

| | |
|---|---|
| Each compound listed in Table 1 or Table 3 | 35 parts |
| Sodium alkylnaphthalenesulfonate | 3 parts |
| Propylene glycol | 5 parts |
| Dimethyl polysiloxane | 0.25 part |
| p-Chloro-m-xylenol | 0.10 part |
| Xanthan gum | 0.30 part |
| Water | 56.35 parts |

An aqueous suspension concentrate was prepared by uniform mixing and wet grinding of the above ingredients.

### Test Example 1

### Controlling effect on rice "Bakanae" disease by dressing of seeds

Unhulled rice (cultivar: Kimmaze) contaminated with rice "Bakanae" disease fungus (Giberella fujikuroi) and a wettable powder prepared according to Example were placed in a vinyl bag, followed by adding thereto a small volume of water, and they were thoroughly mixed to conduct dressing. After this treatment, the unhulled rice was air-dried overnight and immersed in water at 15°C for 1 week, and then its germination was accelerated at 30°C. The unhulled rice thus treated was sowed in a nursery box and its germination was hastened at 30°C for 3 days, followed by cultivation in a greenhouse for about 1 month. The percentage of infected seedlings of the rice was investigated and the control efficacy was calculated according to the following equation. The percentage of infected seedlings on the untreated plot was 78%.

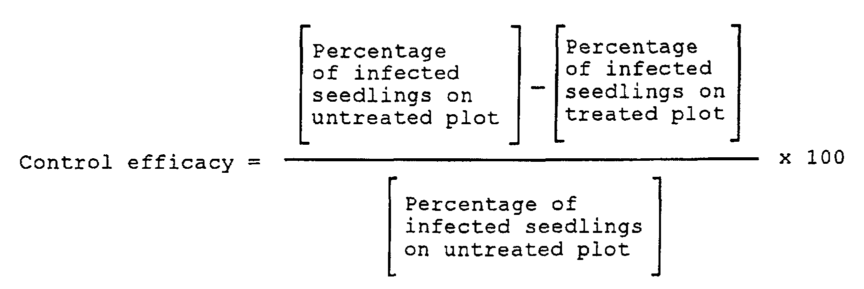

The results are shown in 4.

**Table 4**

| Test agent | Applying dosage Percentage of active ingredient based on the weight of dry unhulled rice (%) | Control efficacy (%) |
|---|---|---|
| Compound No. 55 | 1 | 84 |

### Test Example 2

### Controlling effect on cucumber downy mildew by mixing with soil

A wettable powder prepared according to the Example was mixed with soil, and the soil was packed in pots so that 5 g of the wettable powder might be applied to each pot. Seedlings of cucumber (cultivar: Suyo) at cotyledon evolution stage were transplanted to the pots. The pots were subjected to cultivation in a greenhouse for 2 weeks, followed by inoculation with zoospores of downy mildew fungus (Pseudoperonospora cubensis). Seven days after the inoculation, the seedlings were investigated and estimation was conducted according to the criterion shown below, after which the control efficacy was calculated. The infection index on the untreated plot was 6.5.

### Infection index

0 : no infection
1 : lesion area percentage 1 to 10%
2 : lesion area percentage 11 to 20%
3 : lesion area percentage 21 to 30%
4 : lesion area percentage 31 to 40%
5 : lesion area percentage 41 to 50%
6 : lesion area percentage 51 to 60%
7 : lesion area percentage 61 to 70%
8 : lesion area percentage 71 to 80%
9 : lesion area percentage 81 to 90%
10 : lesion area percentage 91 to 100%

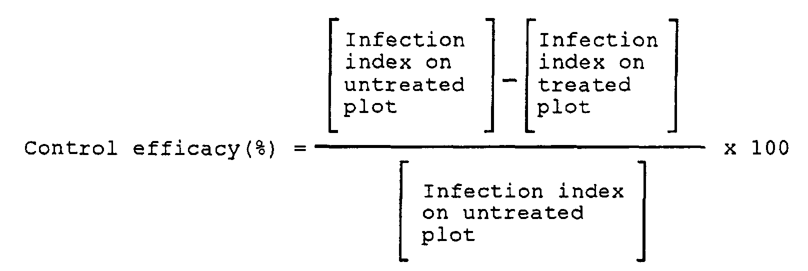

The results are shown in Table 5.

**Table 5**

| Test agent | Applying dosage (Amount of the active ingredient per pot (g)) | Control efficacy (%) |
|---|---|---|
| Compound No. 55 | 0.5 | 81 |

### Test Example 3

### Controlling effect by dressing of seeds against wheat powdery mildew

Seeds of wheat (cultivar: Chihoku) and a wettable powder prepared according to Example were placed in a vinyl bag, followed by adding thereto a small volume of water, and they were thoroughly mixed to conduct dressing. After this treatment, the seeds were air-dried overnight, sowed in pots, and cultivated in a greenhouse. One month after the sowing, the seedlings thus obtained were inoculated with spores of powdery mildew fungus (Erysiphe graminis) by sprinkling. Seven days after the inoculation, lesions were counted and the control efficacy was calculated according to the following equation. The number of lesions per leaf on the untreated plot was 25.

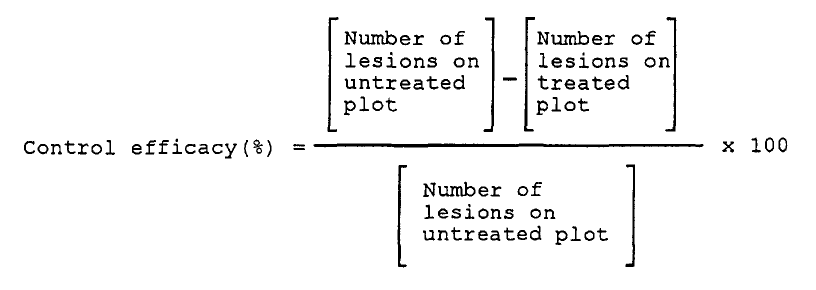

The results are shown in Table 6.

**Table 6**

| Test agent | Applying dosage Percentage of active ingredient based on the weight of dry seeds (%) | Control efficacy (%) |
|---|---|---|
| Compound No. 55 | 1 | 88 |

### Comparative Test Example 1

### Preventive effect on cucumber downy mildew by spraying

Cucumber plants (cultivar: Suyo) at the 2.5 leaf stage cultivated in pots was subjected to foliage application of a liquid prepared by diluting a wettable powder prepared according to the Example with water to a predetermined concentration. After the application, the pots were subjected to cultivation in a greenhouse. Six days after the treatment, the cucumber plants were inoculated with zoospores of downy mildew fungus (Pseudoperonospora cubensis). Seven days after the inoculation, the cucumber plants were investigated and the infection index was estimated according to Test Example 2, after which the control efficacy was calculated. The infection index on the untreated plot was 7.8.

The results are shown in Table 7.

**Table 7**

| Test agent | Concentration (ppm) | Control efficacy (%) |
|---|---|---|
| Compound No. 3 | 50 | 20 |

### Comparative Test Example 2

### Controlling effect on wheat powdery mildew

At the internode elongation stage, a wettable powder prepared according to Example was sprayed in a dosage of 100 liters/10 are. Two months after the treatment with the chemical, the percentage of lesion area of each flag leaf was measured and the control efficacy was calculated according to Test Example 3. The percentage of lesion area on the untreated plot was 15%.

The results are shown in Table 8.

**Table 8**

| Test agent | Applying dosage (ppm) | Control efficacy (%) |
|---|---|---|
| Compound No. 3 | 200 | 27 |
| Compound No. 55 | 200 | 7 |

As is clear from the above results, the dressing of seeds with the fungicidal composition containing a compound of general formula (I) was superior in controlling effect to the treatment of the stems and leaves of a plant under cultivation by spraying (Comparative Test Examples 1 and 2). It has been revealed that the utilization method of the present invention gives advantageous results in terms of using amount per area under cultivation.

## Claims

1. A method of the utilization of a fungicidal composition **characterized by** treating seeds of a subject plant or a cultivation carrier for sowing the subject plant with an effective amount of a bactericidal composition containing, as the active ingredient, one or more members selected from among 1,2,3-thiadiazole derivatives represented by general formula (I) and salts thereof: 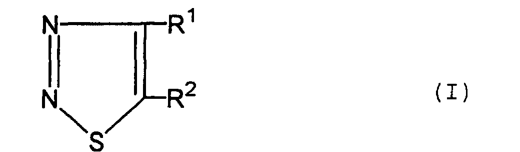 wherein R¹ is a hydrogen atom, a (C₁₋₆)alkyl group or a (C₃₋₇)cycloalkyl group, and R² is
CO-Y-R³
[wherein R³ is a hydrogen atom; a (C₁₋₂₀)alkyl group; a halo(C₁₋₂₀)alkyl group; a (C₂₋₂₀)alkenyl group; a halo(C₂₋₂₀)alkenyl group; a (C₂₋₂₀)alkynyl group; a halo(C₂₋₂₀)alkynyl group; a (C₃₋₁₂)cycloalkyl group; a (C₁₋₆) alkoxy(C₁₋₆) alkyl group; a (C₁₋₆) alkoxy (C₁₋₆) alkoxy(C₁₋₆)alkyl group; a carboxy(C₁₋₆)alkyl group; a (C₁₋₂₀)alkoxycarbonyl (C₁₋₆) alkyl group; a carbamoyl (C₁₋₆) alkyl group; a substituted carbamoyl(C₁₋₆)alkyl group having one or two substituents which may be the same or different and are selected from (C₁₋₆)alkyl groups, phenyl group and substituted phenyl groups having as the substituent(s) one or more halogen atoms or (C₁₋₆)alkyl groups, which may be the same or different; a cyano (C₁₋₆) alkyl group; a (C₁₋₆) alkylcarbonyloxy(C₁₋₆) alkyl group; a (C₁₋₆) alkylcarbonylamino (C₁₋₆) alkyl group; a phenyl group; a substituted phenyl group having 1 to 5 substituents which may be the same or different and are selected from halogen atoms, hydroxyl group, cyano group, nitro group, (C₁₋₆)alkyl groups, halo(C₁₋₆)alkyl groups, (C₁₋₆)alkoxy groups, halo (C₁₋₆) alkoxy groups, carboxyl group, (C₁₋₁₂)alkoxycarbonyl groups, carbamoyl group, and substituted carbamoyl groups having one or two substituents which may be the same or different and are selected from halogen atoms, (C₁₋₁₂)alkyl groups, phenyl group and substituted phenyl groups having as the substituent(s) 1 to 5 (C₁₋₆)alkyl groups which may be the same or different; a phenyl(C₁₋₆)alkyl group; a substituted phenyl(C₁₋₆)alkyl group having on the ring 1 to 5 substituents which may be the same or different and are selected from halogen atoms, hydroxyl group, cyano group, nitro group, (C₁₋₆)alkyl groups, halo(C₁₋₆)alkyl groups, (C₁₋₆)alkoxy groups, halo(C₁₋₆)alkoxy groups, carboxyl group, (C₁₋₁₂)alkoxycarbonyl groups, carbamoyl group, and substituted carbamoyl groups having one or two substituents which may be the same or different and are selected from halogen atoms, (C₁₋₁₂)alkyl groups, phenyl group and substituted phenyl groups having as the substituent(s) 1 to 5 (C₁₋₆)alkyl groups which may be the same or different; a phenylcarbonyloxy(C₁₋₆)alkyl group; a substituted phenylcarbonyloxy(C₁₋₆)alkyl group having on the ring 1 to 5 substituents which may be the same or different and are selected from halogen atoms, hydroxyl group, cyano group, nitro group, (C₁₋₆)alkyl groups, halo (C₁₋₆) alkyl groups, (C₁₋₆)alkoxy groups, halo(C₁₋₆)alkoxy groups, carboxyl group, (C₁₋₁₂)alkoxycarbonyl groups, carbamoyl group, and substituted carbamoyl groups having one or two substituents which may be the same or different and are selected from halogen atoms, (C₁₋₁₂)alkyl groups, phenyl group and substituted phenyl groups having as the substituent (s) 1 to 5 (C₁₋₆)alkyl groups which may be the same or different; a phenylcarbonylamino(C₁₋₆)alkyl group; a substituted phenylcarbonylamino(C₁₋₆)alkyl group having on the ring 1 to 5 substituents which may be the same or different and are selected from halogen atoms, hydroxyl group, cyano group, nitro group, (C₁₋₆)alkyl groups, halo (C₁₋₆) alkyl groups, (C₁₋₆)alkoxy groups, halo (C₁₋₆) alkoxy groups, carboxyl group, (C₁₋₁₂) alkoxycarbonyl groups, carbamoyl group, and substituted carbamoyl groups having one or two substituents which may be the same or different and are selected from halogen atoms, (C₁₋₁₂)alkyl groups, phenyl group and substituted phenyl groups having as the substituent(s) 1 to 5 (C₁₋₆)alkyl groups which may be the same or different; a 5- or 6-membered heterocyclic ring having one or more heteroatoms which may be the same or different and are selected from oxygen atom, sulfur atom and nitrogen atom; a substituted 5- or 6-membered heterocyclic ring having 1 to 5 substituents which may be the same or different and are selected from halogen atoms, hydroxyl group, cyano group, nitro group, (C₁₋₆)alkyl groups, halo(C₁₋₆)alkyl groups, (C₁₋₆)alkoxy groups, halo (C₁₋₆) alkoxy groups, carboxyl group, (C₁₋₁₂) alkoxycarbonyl groups, carbamoyl group, and substituted carbamoyl groups having one or two substituents which may be the same or different and are selected from halogen atoms, (C₁₋₁₂)alkyl groups, phenyl group and substituted phenyl groups having as the substituent(s) 1 to 5 (C₁₋₆)alkyl groups which may be the same or different; a 5- or 6-membered heterocyclic ring-(C₁₋₆)alkyl group having one or more heteroatoms which may be the same or different and are selected from oxygen atom, sulfur atom and nitrogen atom; a substituted 5- or 6-membered heterocyclic ring-(C₁₋₆)alkyl group having 1 to 5 substituents which may be the same or different and are selected from halogen atoms, hydroxyl group, cyano group, nitro group, (C₁₋₆)alkyl groups, halo(C₁₋₆)alkyl groups, (C₁₋₆)alkoxy groups, halo(C₁₋₆)alkoxy groups, carboxyl group, (C₁₋₁₂)alkoxycarbonyl groups, carbamoyl group, and substituted carbamoyl groups having one or two substituents which may be the same or different and are selected from halogen atoms, (C₁₋₁₂)alkyl groups, phenyl group and substituted phenyl groups having as the substituent(s) 1 to 5 (C₁₋₆)alkyl groups which may be the same or different; a 5- or 6-membered heterocyclic ring-carbonyloxy(C₁₋₆)alkyl group having one or more heteroatoms which may be the same or different and are selected from oxygen atom, sulfur atom and nitrogen atom; a substituted 5- or 6-membered heterocyclic ring-carbonyloxy(C₁₋₆)alkyl group having 1 to 5 substituents which may be the same or different and are selected from halogen atoms, hydroxyl group, cyano group, nitro group, (C₁₋₆)alkyl groups, halo(C₁₋₆)alkyl groups, (C₁₋₆) alkoxy groups, halo (C₁₋₆) alkoxy groups, carboxyl group, (C₁₋₁₂)alkoxycarbonyl groups, carbamoyl group, and substituted carbamoyl groups having one or two substituents which may be the same or different and are selected from halogen atoms, (C₁₋₁₂)alkyl groups, phenyl group and substituted phenyl groups having as the substituent(s) 1 to 5 (C₁₋₆)alkyl groups which may be the same or different; a 5- or 6-membered heterocyclic ring-carbonylamino(C₁₋₆)alkyl group having one or more heteroatoms which may be the same or different and are selected from oxygen atom, sulfur atom and nitrogen atom; a substituted 5- or 6-membered heterocyclic ring-carbonylamino(C₁₋₆)alkyl group having 1 to 5 substituents which may be the same or different and are selected from halogen atoms, hydroxyl group, cyano group, nitro group, (C₁₋₆)alkyl groups, halo(C₁₋₆)alkyl groups, (C₁₋₆)alkoxy groups, halo(C₁₋₆)alkoxy groups, carboxyl group, (C₁₋₁₂)alkoxycarbonyl groups, carbamoyl group, and substituted carbamoyl groups having one or two substituents which may be the same or different and are selected from halogen atoms, (C₁₋₁₂)alkyl groups, phenyl group and substituted phenyl groups having as the substituent(s) 1 to 5 (C₁₋₆)alkyl groups which may be the same or different; or
-N=C(R⁵)R⁶
wherein each of R⁵ and R⁶, which may be the same or different, is a hydrogen atom, a (C₁₋₆)alkyl group, a halo(C₁₋₆)alkyl group, a (C₃₋₆)cycloalkyl group, a phenyl group or a substituted phenyl group having one or more substituents which may be the same or different and are selected from halogen atoms, (C₁₋₆)alkyl groups and (C₁₋₆)alkoxy groups, R⁵ and R⁶ being able to be taken together to represent a (C₂₋₆)alkylene group which may contain O, S or NR⁴ (wherein R⁴ is a hydrogen atom or a (C₁₋₆)alkyl group) between adjacent carbon atoms of the carbon chain, and Y is O, S or NR⁴ (wherein R⁴ is as defined above)], or 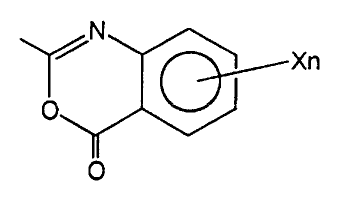 (wherein each of Xs, which may be the same or different, is a halogen atom, a hydroxyl group, a cyano group, a nitro group, a (C₁₋₆)alkyl group, a halo(C₁₋₆)alkyl group, a (C₁₋₆)alkoxy group, a halo(C₁₋₆)alkoxy group, a (C₁₋₆)alkylcarbonyl group, a carboxyl group, a (C₁₋₁₂)alkoxycarbonyl group, a carbamoyl group, or a substituted carbamoyl group having one or two substituents which may be the same or different and are selected from halogen atoms, (C₁₋₁₂)alkyl groups, phenyl group and substituted phenyl groups having as the substituent(s) 1 to 5 (C₁₋₆)alkyl groups which may be the same or different, and n is an integer of 0 to 4).

2. A method of the utilization of a fungicidal composition according to claim 1, wherein the subject plant is a plant-derived thing for propagation.

3. A method of the utilization of a fungicidal composition according to any one of claim 1 and claim 2, wherein the effective amount is 0.01 to 40%, in terms of the active ingredient, based on the weight of the plant-derived thing for propagation, or 0.0001 to 10%, in terms of the active ingredient, based on the weight of the cultivation carrier.

4. A method of the utilization of a fungicidal composition according to any one of claims 1 to 3, wherein the active ingredient is N-(3-chloro-4-methylphenyl)-4-methyl-1,2,3-thiadiazole-5-carboxamide.
